# EUROPEAN PATENT APPLICATION

(11) **EP 1 843 608 A1**
(43) Date of publication of application: **10.10.2007**
(21) Application number: 06711993.3
(22) Date of filing: 19.01.2006
(51) Int. Cl.: H04Q 7/22

(54) **MOBILE COMMUNICATION SYSTEM, BASE STATION, MOBILE STATION, POSITION MANAGING STATION, AND CALL RECEPTION CONTROL METHOD AND PROGRAM**

(30) Priority: 26.01.2005 JP 2005017559
(71) Applicant: NEC Corporation, Minato-ku Tokyo 108-8001 (JP)
(72) Inventor: IKEDA, Masahisa, , Tokyo, 1088001 (JP)
(74) Representative: Betten & Resch
(86) International application number: PCT/JP2006/300747
(87) International publication number: WO 2006/080236

(57) **Abstract**

To obtain a mobile communication system in which a mobile station can prevent a call loss due to move among base stations while performing battery saving. Base stations 200 and 210 transmit paging signals 10 and 11 in order to call a terminal 100 when there is an incoming call from a terminal 110 to the terminal 100 and add identification information indicating the terminal 100 to broadcast information 20 and 21 and transmit the identification information. When there is an incoming call to the terminal 100 when the terminal 100 moves from a zone A to a zone B, the terminal 100 receives the identification information added to the broadcast information 21 and recognizes the incoming call during zone shift processing and, after the zone shift processing (after the terminal 100 goes into a waiting state in the shifting destination zone B), immediately performs normal incoming call processing.

## Description

### Technical Field

The present invention relates to a mobile communication system, a base station, a mobile station, a location management station, an incoming call control method, and a program, and, more particularly to a mobile communication system including a mobile station and a base station.

### Background Art

For incoming call processing in a system with a limited power supply capacity such as cellular phones, there is a problem in that, when a terminal (a mobile station) moves between base stations (zones) in a waiting state, a call loss occurs when the terminal has a call during zone shift processing. Because of a decrease in reception power from a base station from which the terminal is waiting for a call and an increase in reception power from other nearby base stations, when the terminal moves between base stations, the terminal is in a state in which a reception channel for paging the terminal (a PCH (Paging Channel) for receiving a paging signal) is closed in a period until the terminal receives Broadcast Information broadcasted from a base station at a destination via a BCH (Broadcast Channel) and returns to the waiting state. Therefore, since an incoming call does not reach the terminal, a call loss occurs.

As a method of solving this problem, there is a method of notifying the base station that the terminal has returned to the waiting state again after the zone shift processing (see, for example, Patent Documents 1 to 3).

Patent Document 1: Japanese Patent Application Laid Open Publication No. 2000-341759

Patent Document 2: Japanese Patent Application Laid Open Publication No. 2002-198893

Patent Document 3: Japanese Patent Application Laid Open Publication No. 2003-9249

### Disclosure of the Invention

However, with this method, when the terminal flits from one base station to another, it is necessary to notify the base stations of the terminal's movement every time the terminal changes base stations. In the system with a limited power supply capacity, this substantially affects time for the terminal to be able to stay in the waiting state. In order to increase the waiting state time of the terminal, it is desirable to reduce exchanges between the terminal and the base stations as much as possible.

It is an object of the invention to provide a mobile communication system, a base station, a mobile station, a location management station, an incoming call control method, and a program that enable a mobile station to prevent a call loss caused by movements among base stations and to perform battery saving.

### Means for solving problems

A mobile communication system according to the invention is a mobile communication system including a mobile station and a base station, wherein the base station adds, when there is an incoming call toward the mobile station, identification information indicating the mobile station to broadcast information and transmits the identification information.

The mobile communication system may be characterized in that the mobile station transmits an incoming call response signal to the base station and performs an incoming call operation in response to reception of the identification information included in the broadcast information. The reception of the identification information may be performed during zone shift processing of the mobile station.

The mobile communication system may be characterized in that the base station deletes the identification information from the broadcast information when the base station cannot receive the incoming call response signal within a predetermined time measured from the incoming call toward the mobile station.

An incoming call control method according to the invention is an incoming call control method for a mobile communication system including a mobile station and a base station, including a step of adding, when there is an incoming call to the mobile station, identification information indicating the mobile station to broadcast information and transmitting the identification information.

A base station according to the invention is a base station of a mobile communication system, characterized in that the base station adds, when there is an incoming call to a mobile station, identification information indicating the mobile station to broadcast information and transmits the identification information.

The base station may be characterized in that the base station deletes the identification information from the broadcast information when the base station cannot receive an incoming call response signal from the mobile station within a predetermined time from the incoming call toward the mobile station. The reception of the identification information may be performed during zone shift processing of the mobile station.

An incoming call control method according to the invention is an incoming call control method for a base station of a mobile communication system, including a step of adding, when there is an incoming call to a mobile station, identification information indicating the mobile station to broadcast information and transmitting the identification information.

A computer program product according to the invention for an incoming call control method for a base station of a mobile communication system, causes a computer to perform processing for adding, when there is an incoming call toward a mobile station, identification information indicating the mobile station to broadcast information and transmitting the identification information.

A mobile station according to the invention is a mobile station of a mobile communication system, characterized in that the mobile station transmits an incoming call response signal to a base station and performs an incoming call operation in response to reception of identification information indicating the mobile station included in broadcast information transmitted by the base station when there is an incoming call to the mobile station.

The mobile station may be characterized in that the reception of the identification information is performed during zone shift processing.

An incoming call control method according to the invention is an incoming call control method for a mobile station of a mobile communication system, including a step of receiving identification information indicating the mobile station included in broadcast information transmitted by a base station when there is an incoming call to the mobile station and a step of transmitting an incoming call response signal to the base station and performing an incoming call operation in response to this reception.

A computer program product according to the invention for an incoming call control method for a mobile station of a mobile communication system, causes a computer to perform processing for receiving identification information indicating the mobile station included in broadcast information transmitted by a base station when there is an incoming call to the mobile station and processing for transmitting an incoming call response signal to the base station and performing an incoming call operation in response to this reception.

A location management station according to the invention is a location management station of a mobile communication system including a mobile station, a base station in a predetermined location registration area, and a location management station that performs management of the mobile station present in the location registration area, characterized in that, when the base station receives an incoming call response signal transmitted from the mobile station to the base station in response to reception of identification information indicating the mobile station added to broadcast information and transmitted by the base station when there is an incoming call to the mobile station, the location management station instructs all base stations in the location registration area to delete the identification information from the broadcast information.

An incoming call control method according to the invention is an incoming call control method for a location management station of a mobile communication system including a mobile station, a base station in a predetermined location registration area, and a location management station that performs management of the mobile station present in the location registration area, including a step of instructing, when the base station receives an incoming call response signal transmitted from the mobile station to the base station in response to reception of identification information indicating the mobile station added to broadcast information and transmitted by the base station when there is an incoming call to the mobile station, all base stations in the location registration area to delete the identification information from the broadcast information.

A computer program product according to the invention for an incoming call control method for a location management station of a mobile communication system including a mobile station, a base station in a predetermined location registration area, and a location management station that performs management of the mobile station present in the location registration area, causing a computer to perform processing for instructing, when the base station receives an incoming call response signal transmitted from the mobile station to the base station in response to reception of identification information indicating the mobile station added to broadcast information and transmitted by the base station when there is an incoming call to the mobile station, all base stations in the location registration area to delete the identification information from the broadcast information.

The broadcast information is system information, cell information, and the like. When the mobile station moves among base stations (zones), the mobile station closes a PCH, which is a channel for receiving a paging signal, receives broadcast information from a destination base station during zone shift processing, and goes into a waiting state in a destination zone to open the PCH. In the invention, the base station adds identification information indicating the mobile station to broadcast information and transmits the identification information when there is an incoming call toward the mobile station. Thus, even if there is an incoming call to the mobile station during the zone shift processing, by receiving the identification information added to the broadcast information, the mobile station can recognize the incoming call and perform incoming call processing without inquiring the base station about presence or absence of the incoming call after going into the waiting state in the destination zone.

According to the invention, in the mobile communication system including the mobile station and the base station, the base station adds identification information indicating the mobile station to broadcast information and transmits the identification information when there is an incoming call toward the mobile station. Thus, there is an effect that the mobile station can prevent a call loss due to movement among base stations while performing battery saving.

### Brief Description of the Drawings

Figure 1 is a diagram showing a structure of a mobile communication system according to an embodiment of the invention;
Figure 2 is a sequence chart showing operations of the mobile communication system according to the embodiment of the invention;
Figure 3 is a sequence chart showing operations of the mobile communication system according to the embodiment of the invention;
Figure 4 is a diagram showing terminal management information held by a location management station in Figure 1;
Figure 5 is a diagram showing a calling terminal list held by a base station in Figure 1;
Figure 6 is a diagram showing a structure of a mobile communication system according to an embodiment of the invention; and
Figure 7 is a sequence chart showing operations of the mobile communication system according to the embodiment of the invention.

### Description of Symbols

- 10, 11: Paging signals
- 20, 21: Broadcast information
- 100, 110: Terminals
- 200 to 270: Base stations
- 300, 310: Location management stations

### Best Mode for Carrying Out the Invention

Exemplary embodiments of the invention will be hereinafter explained with reference to the drawings.

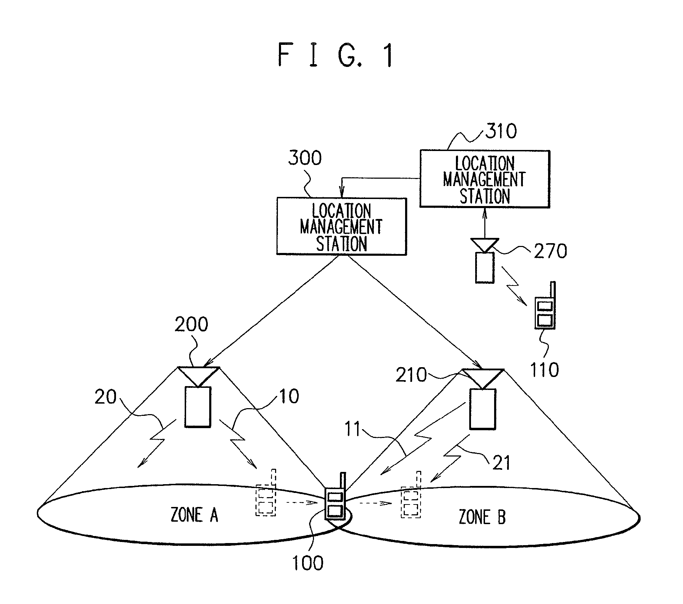

Figure 1 is a diagram showing a structure of a mobile communication system according to an embodiment of the invention. As shown in Figure 1, the mobile communication system includes terminals (mobile stations) 100 and 110, base stations 200, 210, and 270, and location management stations 300 and 310. The base stations 200 and 210 cover a zone A and a zone B, respectively, and relay signals between the terminal 100 and a communication network. The base station 270 relays signals between the terminal 110 and the communication network.

Each of the location management stations 300 and 310 is connected to a base station in a predetermined location registration area allocated to the own station (the location management station 300 is connected to the base stations 200 and 210, and the location management station 300 is connected to the base station 270) and performs management of terminals that have registered locations in the base stations controlled by the own station. Each of the location management stations 300 and 310 requests, when a terminal that received an incoming call request is present in the predetermined location registration area allocated to the own station, all base stations controlled by the own station to transmit paging signals serving as incoming call signals for calling the terminal. Each of the base stations requested to transmit paging signals transmits a paging signal to the terminal.

When each of the terminals 100 and 110 moves among base stations, the terminal temporarily closes a channel for receiving a paging signal (PCH (Paging Channel)), receives Broadcast Information broadcasted from a destination base station via a BCH (Broadcast Channel) in synchronization with the destination base station, goes into a waiting state in a destination zone (a zone covered by the shifting destination base station), and opens the PCH again. In other words, when each of the terminals perform zone shift processing, the terminal receives broadcast information during this zone shift processing and goes into a waiting state after the zone shift processing is finished. The broadcast signal is repeatedly transmitted from each of the base stations 200, 210, and 270, i.e., always transmitted from each of the base stations 200, 210, and 270.

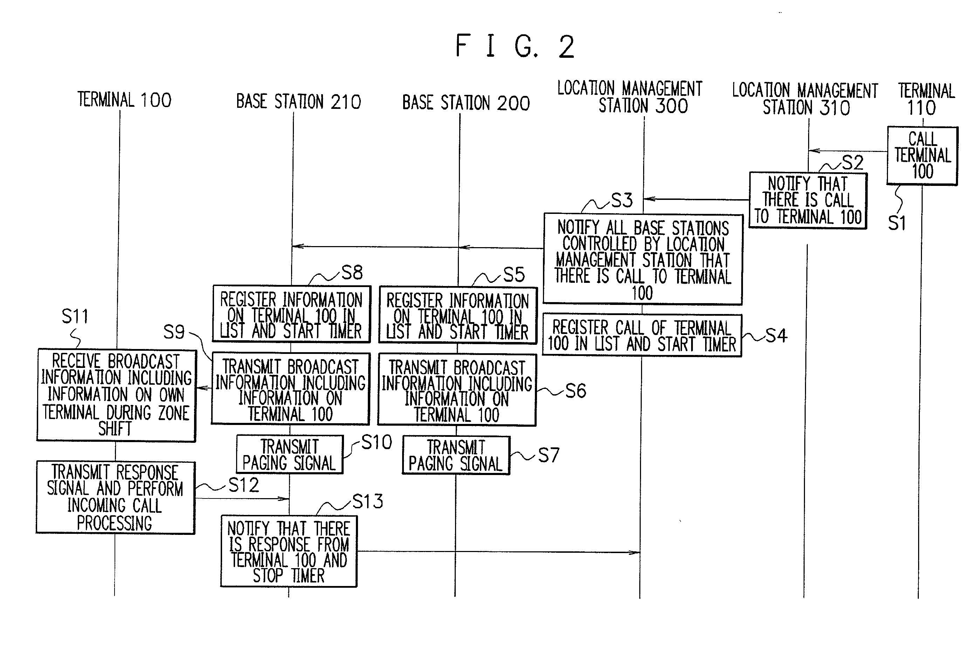

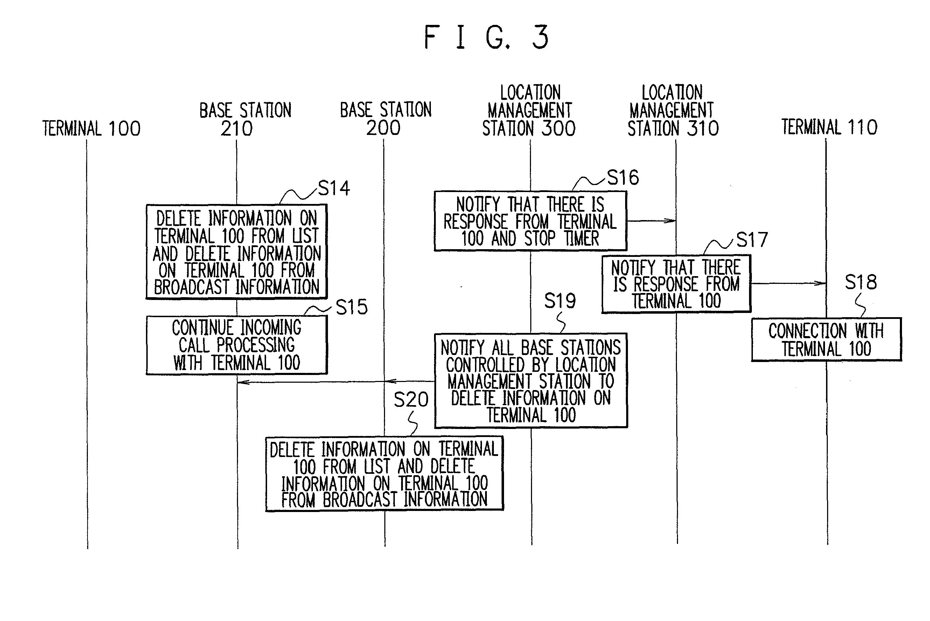

Operations in the embodiment of the invention will be explained using the drawings. FIGS 2 and 3 are sequence charts showing operations of the mobile communication system shown in Figure 1. Components equivalent to those in Figure 1 are denoted by the identical reference numerals. In Figures 2 and 3, the base station 270 is not shown. However, it goes without saying that communication between the terminal 110 and the location management station 310 is performed via the base station 270.

Figures 2 and 3 show operations performed when there is an incoming call from the terminal 110 to the terminal 100 while the terminal 100 is moving from the zone A to the zone B. Since the terminal 100 is moving from the zone A to the zone B (during the zone shift processing), a call from the terminal 110 to the terminal 100 is performed before the terminal 100 closes the PCH and receives broadcast information 21 broadcasted in the zone B (step S1 in Figure 2). The location management station 310, which performs location management for the terminal 110, notifies the location management station 300, which performs location management for the terminal 100, that there is a call from the terminal 110 to the terminal 100 (step S2 in Figure 2). The location management station 300 notifies all the base stations 200 and 210 controlled by the own station that there is a call to the terminal 100 (step S3 in Figure 2).

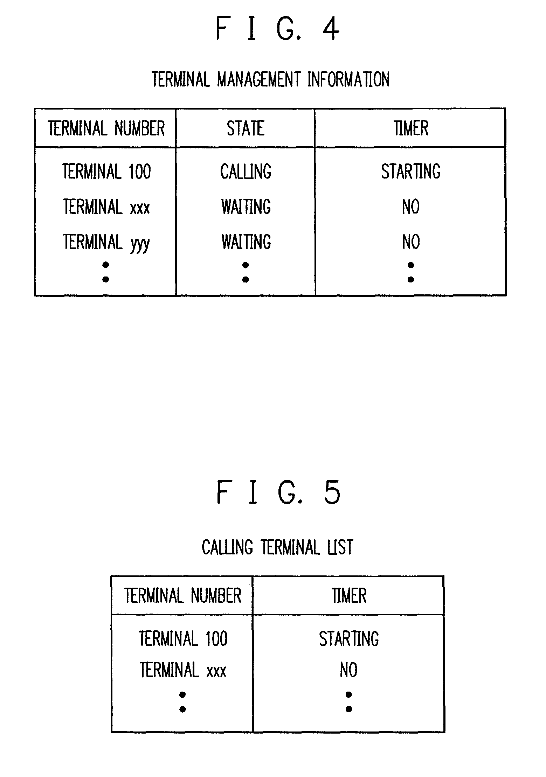

Figure 4 is a diagram showing terminal management information held by the location management station 300 in Figure 1. The location management station 300 has the terminal management information shown in Figure 4 as information on terminals that have registered locations in a base station controlled by the station 300. The terminal management information includes terminal numbers serving as identification information indicating terminals, state information, and timer information. A terminal number is, for example, IMSI (International Mobile Subscriber Identity) or TMSI (Temporary Mobile Subscriber Identity). The state information is information indicating whether the terminal is in a waiting state or is put in a calling state by an incoming call from another terminal. The timer information is information indicating a starting state of a timer that is activated by a call to the terminal.

After step S2 in Figure 2, the location management station 300 notifies the base stations 200 and 210 that there is a call to the terminal 100 (step S3 in Figure 2). As shown in Figure 4, the location management station 300 sets the state information of the terminal 100 in the calling state and starts the timer (step S4 in Figure 2).

Figure 5 is a diagram showing a calling terminal list held by each of the base stations 200 and 210 in Figure 1. As shown in Figure 5, each of the base stations 200 and 210 under control of the location management station 300 has a list of terminals notified by the location management station 300 that the terminals are called. The base station registers terminal numbers of the terminals in this list and starts the timer. Therefore, after step S3 in Figure 2, each of the base stations 200 and 210 registers the terminal number of the terminal 100 in the list and starts the timer as shown in Figure 5 (steps S5 and S8 in Figure 2).

Each of the base stations 200 and 210 adds the terminal number of the terminal 100 to the broadcast information (20, 21) and transmits the terminal number (steps S6 and S9 in Figure 2). The terminal number is added to the broadcast information by inserting the terminal number in an unused portion of a format of the broadcast information. Each of the base stations 200 and 210 transmits paging signals (10, 11) to the terminal 100 to call the terminal 100 (steps S7 and S10 in Figure 2).

The PCH is notified at different timings in the respective zones. Thus, the terminal needs to temporarily close a channel for paging reception at the time of zone shift to prevent wrong reception and open the channel again in a zone at a destination after the zone shift processing is finished. As described above, since the terminal 100 is performing the zone shift processing and has not opened the PCH, the terminal 100 is in a state in which the terminal 100 cannot receive a paging signal. Therefore, the terminal 100 cannot begin an incoming call operation in response to reception of a paging signal. However, since the terminal 100 receives broadcast information during the zone shift processing, the terminal 100 can recognize an incoming call toward the own terminal by receiving the terminal number of the own terminal included in the broadcast information.

The terminal 100 receives the broadcast information 21 from the base station 210 during the zone shift processing from the zone A to the zone B (step S11 in Figure 2). Since the terminal number of the terminal 100 is included in the broadcast information 21, the terminal 100 recognizes that there is an incoming call toward the own terminal, transmits an incoming call response signal to the base station 210 immediately after the zone shift processing is completed, and begins a normal incoming call operation (an operation same as the incoming call operation performed in response to reception of a paging signal) (step S12 in Figure 2). When the base station 210 receives the incoming call response signal from the terminal 100, the base station 210 notifies the location management station 300 that there is a response from the terminal 100 and stops the timer (step S13 in Figure 2). The base station 210 deletes the terminal number of the terminal 100 from the list shown in Figure 5 and deletes the terminal number of the terminal 100 from the broadcast information 21 (step S14 in Figure 3). The base station 210 continues the incoming call processing with the terminal 100 (step S15 in Figure 3).

When the location management station 300 receives the notification from the base station 210, the location management station 300 notifies the location management station 310 that there is a response from the terminal 100 and stops the timer (step S16 in Figure 3). When the location management station 310 receives the notification from the location management station 300, the location management station 310 notifies the terminal 110 that there is a response from the terminal 100 (step S17 in Figure 3). Connection processing between the terminal 100 and the terminal 110 is performed (step S18 in Figure 3). The location management station 300 notifies all the base stations 200 and 210 controlled by the own station to delete the terminal number of the terminal 100 from the list shown in Figure 5 (step S19 in Figure 3). The base station 200 deletes the terminal number of the terminal 100 from the list shown in Figure 5 and deletes the terminal number of the terminal 100 from the broadcast information 20 (step S20 in Figure 3). Since the base station 210 has deleted the terminal number of the terminal 100 in step S14, the location management station 300 may not give the notification in step S19 only to the base station 210.

As described above, in the embodiment of the invention, since the information indicating that there is a call to the terminal (the terminal number serving as identification information indicating the terminal) is present in the broadcast information from the shifting destination base station even when the terminal cannot receive a paging signal because the terminal is moving between base stations, it is possible to perform incoming call processing without causing a call loss. Further, since the terminal does not need to inquire a base station about presence or absence of an incoming call after the terminal established a communication with the destination base station, it is possible to perform battery saving. In other words, a terminal with a limited power supply capacity of battery drive or the like can reduce a call loss while performing battery saving. Since the terminal does not inquire the destination base station about presence or absence of an incoming call, a response time to an incoming call is reduced compared with the conventional system.

In steps S6 and S9 in Figure 2, each of the base stations 200 and 210 adds the terminal number of the terminal 100 to the broadcast information and transmits the terminal number. However, the base station may add information on time that has passed since an incoming call is sent to the terminal 100 (since the notification from the location management station 300 in step S3 is received) to the broadcast information in addition to the terminal number of the terminal 100 and transmit the time information. When the system provides services such as an answering machine service and a transfer service, the terminal 100 can use this time information as a trigger for receiving the services (e.g., when the time information is larger than a predetermined threshold, the terminal 100 requests the system to start recording of the answering machine service). As the broadcast information is repeatedly transmitted as described above, the time information is updated and transmitted.

When there is a call from the terminal 110 to the terminal 100 when a location of the terminal 100 is not registered, a base station in a location registration area in which the terminal 100 has canceled location registration may add the terminal number of the terminal 100 to the broadcast information and transmits the terminal number. When the terminal 100 registers a location in that area again, the terminal 100 can immediately recognize an incoming call to the own terminal by receiving the number of the own terminal included in the broadcast information.

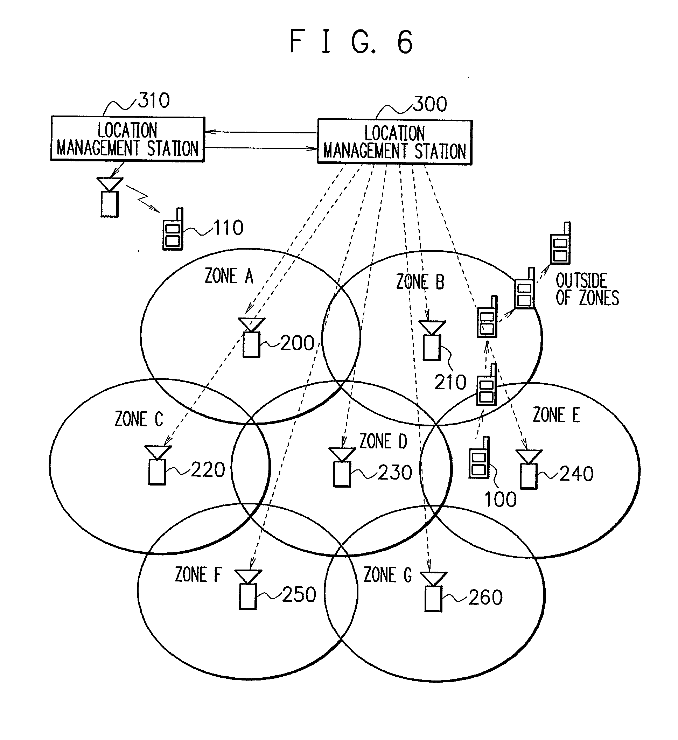

Operations of incoming call generation at respective movement timings according to the movement of the terminal 100 will be explained using the drawings. Figure 6 is a diagram showing a structure of a mobile communication system according to an embodiment of the invention. Components equivalent to those in Figure 1 are denoted by the identical reference numerals and signs.

In Figure 6, base stations 220, 230, 240, 250, and 260 are added and connected to the location management station 300. Like the base stations 200 and 210, the base stations 220, 230, 240, 250, and 260 are controlled by the location management station 300. The location management station 300 performs management of the terminal 100 that has registered a location in the base stations controlled by the station 300. The base stations 200, 210, 220, 230, 240, 250, and 260 transmit radio signals in the zone A, the zone B, a zone C, a zone D, a zone E, a zone F, and a zone G, respectively. Operations of the base stations 220, 230, 240, 250, and 260 are the same as the operations of the base stations 200 and 210 shown in Figures 2 and 3.

First, operations performed when there is an incoming call from the terminal 110 to the terminal 100 when the terminal 100 remains stationary in the zone E of the base station 240 will be explained. When there is an incoming call from the terminal 110 to the terminal 100 while the terminal 100 remains stationary in the zone E, the location management station 300 notifies all the base stations 200, 210, 220, 230, 240, 250, and 260 that there is the incoming call to the terminal 100 (step S3 in Figure 2). As a result, each of the base stations 200, 210, 220, 230, 240, 250, and 260 transmits a paging signal for calling the terminal 100 after steps S5 and S6 (S8 and S9) in Figure 2 (step S7 (S10) in Figure 2). At this point, since the terminal 100 is in a state in which the terminal 100 is opening the PCH in the zone E rather than performing the zone shift processing, the terminal 100 receives the paging signal from the base terminal 240. Upon receipt of the paging signal from the base station 240, the terminal 100 transmits an incoming call response signal to the base station 240 and goes into an incoming call operation. This makes it possible to make a call to the terminal 110.

When the base station 240 receives the incoming call response signal from the terminal 100, the base station 240 performs processing same as the processing in step S13 and the subsequent steps in Figure 2. The location management station 300 performs processing same as the processing in steps S16 and S19 in Figure 3. Thus, the terminal number of the terminal 100 is deleted from broadcast information transmitted from each of the base stations 200, 210, 220, 230, 240, 250, and 260.

Operations performed when there is an incoming call from the terminal 110 to the terminal 100 while the terminal 100 is moving from the base station 240 to the base station 210 (from the zone E to the zone B) will be explained. The operations in this case are the same as the operations already explained using Figures 1 to 3 (the operations performed when there is an incoming call from the terminal 110 to the terminal 100 while the terminal 100 is moving from the zone A to the zone B). Therefore, although the terminal 100 performing zone shift processing from the zone E to the zone B is in a state in which the terminal 100 cannot receive a paging signal, the terminal 100 can recognize that there is an incoming call to the own terminal by receiving the terminal number of the terminal 100 included in the broadcast information from the destination base station 210. The terminal 100 transmits an incoming call response signal to the base station 210 and goes into an incoming call operation. This makes it possible to make a call to the terminal 110. Therefore, the incoming call to the terminal 100 during the zone shift processing does not cause a call loss.

Operations performed when there is an incoming call from the terminal 110 to the terminal 100 while the terminal 100 is moving from the zone B to the outside of the zones and none of the base stations 200, 210, 220, 230, 240, 250, and 260 can receive an incoming call response signal from the terminal 100 will be explained.

When the terminal 100 has closed the PCH according to the movement from the zone B to the outside of the zones, when there is an incoming call from the terminal 110 to the terminal 100, the location management station 300 notifies all the base stations 200, 210, 220, 230, 240, 250, and 260 that there is the incoming call to the terminal 100 (step S3 in Figure 2). The location management station 300 sets the state information of the terminal 100 in the calling state and starts the timer for the terminal 100 (step S4 in Figure 2 and Figure 4).

Each of the base stations 200, 210, 220, 230, 240, 250, and 260 registers the terminal number of the terminal 100 in the list and starts the timer for the terminal 100 (step S5 (S8) in Figure 2 and Figure 5). Each of the base stations 200, 210, 220, 230, 240, 250, and 260 adds the terminal number of the terminal 100 to broadcast information and transmits the terminal number (step S6 (S9) in Figure 2) and transmits a paging signal to the terminal 100 to call the terminal 100 (step S7 (S10) in Figure 2).

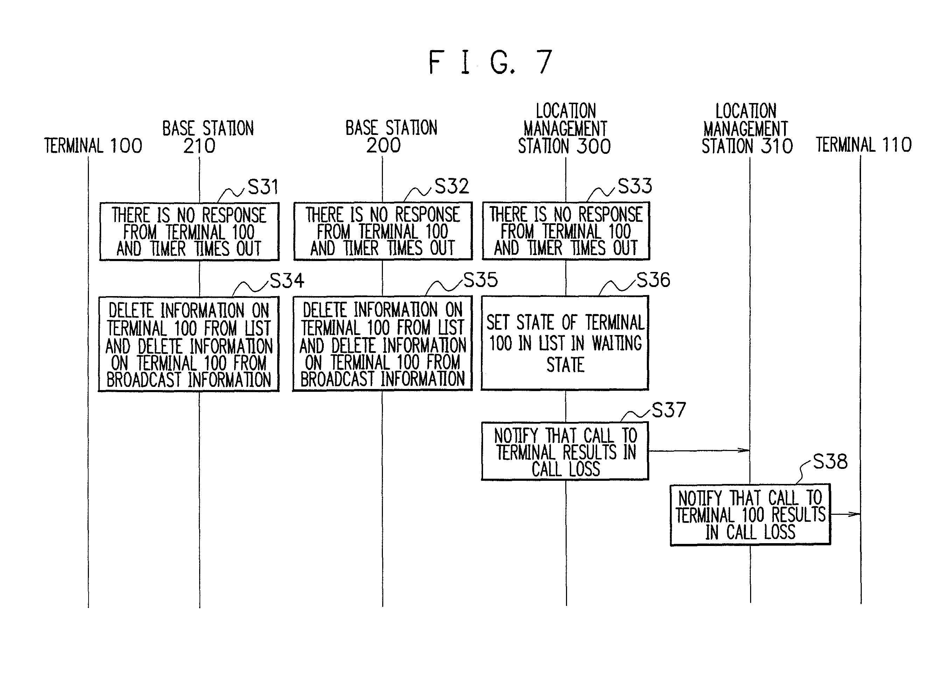

However, since the terminal 100 has closed the PCH according to the movement from the zone B to the outside of the zones, the terminal 100 cannot receive the paging signal or the broadcast information and return an incoming call response signal. Operations performed by the system when there is no response from the terminal 100 after the respective base stations transmit paging signals in steps S7 and S10 in Figure 2 are shown in Figure 7. In Figure 7, the base stations 220, 230, 240, 250, and 260 are not shown. However, operations of the base stations 220, 230, 240, 250, and 260 are the same as the operations of the base stations 200 and 210 shown in Figure 7.

After the respective base stations transmit the paging signals in steps S7 and S10 in Figure 2, none of the base stations 200, 210, 220, 230, 240, 250, and 260 can receive an incoming call response signal from the terminal 100. When a predetermined time passes from the start of the timers in the respective base stations and the location management station 300, the timers notify timeout (steps S31 (S32) and S33 in Figure 7). Consequently, each of the base stations 200, 210, 220, 230, 240, 250, and 260 deletes the terminal number of the terminal 100 from the list and the broadcast information (step S34 (S35) in Figure 7 and Figure 5). This makes it possible to prevent the call to the terminal 100 performed by using the broadcast information from being continued regardless of the fact the terminal 100 is moving to the outside of the zones. The location management station 300 sets the state information of the terminal 100 in the waiting state (step S36 in Figure 7 and Figure 4) and notifies, via the location management station 310, the terminal 110 that the call to the terminal 100 results in a call loss (steps S37 and S38 in Figure 7).

It goes without saying that it is possible to realize the processing operations of the respective terminals, the respective base stations, and the respective location management stations according to the sequence charts shown in Figures 2, 3, and 7 by causing a computer serving as a CPU (a control unit) to read and execute programs stored in a storage medium such as a ROM in advance.

## Claims

1. A mobile communication system comprising a mobile station and a base station, wherein
when there is an incoming call to the mobile station, the base station adds to broadcast information identification information indicating the mobile station and transmits the identification information.

2. The mobile communication system according to claim 1, wherein the mobile station transmits an incoming call response signal to the base station and performs an incoming call operation upon receipt of the identification information included in the broadcast information.

3. The mobile communication system according to claim 2, wherein the receipt of the identification information is performed during zone shift processing of the mobile station.

4. The mobile communication system according to claim 2 or 3, wherein the base station deletes the identification information from the broadcast information when the base station cannot receive the incoming call response signal within a predetermined time measured from the incoming call toward the mobile station.

5. The mobile communication system according to any one of claims 1 to 4, wherein the base station adds information on time that passed from the incoming call toward the mobile station to the broadcast information in addition to the identification information and transmits the time information.

6. The mobile communication system according to any one of claims 1 to 5, wherein the base station transmits a paging signal to call the mobile station when there is the incoming call toward the mobile station.

7. The mobile communication system according to any one of claims 1 to 6, comprising a location management station that performs management of the mobile station present in a predetermined location registration area wherein the base station exists in the location registration area.

8. The mobile communication system according to claim 7, wherein the location management station instructs, when any one of base stations in the location registration area receives an incoming call response signal from the mobile station, the base stations in the location registration area to delete the identification information from the broadcast information.

9. An incoming call control method for a mobile communication system including a mobile station and a base station, comprising a step of adding, when there is an incoming call to the mobile station, identification information indicating the mobile station to broadcast information and
a step of transmitting the identification information.

10. The incoming call control method according to claim 9, comprising a step of, in the mobile station, transmitting an incoming call response signal to the base station and performing an incoming call operation upon receipt of the identification information included in the broadcast information.

11. The incoming call control method according to claim 10, wherein the receipt of the identification information is performed during zone shift processing of the mobile station.

12. The incoming call control method according to claim 10 or 11, comprising a step of, in the base station, deleting the identification information from the broadcast information when the base station cannot receive the incoming call response signal within a predetermined time measured from the incoming call toward the mobile station.

13. The incoming call control method according to any one of claims 9 to 12, wherein, in the step of adding the identification information to the broadcast information and transmitting the identification information, information on time that passed from the incoming call toward the mobile station is added to the broadcast information in addition to the identification information and transmitted.

14. The incoming call control method according to any one of claims 9 to 13, comprising a step of, in the base station, transmitting a paging signal to call the mobile station when there is the incoming call toward the mobile station.

15. The incoming call control method according to any one of claims 9 to 14, wherein the mobile communication system includes a location management station that performs management of the mobile station present in a predetermined location registration area and the base station exists in the location registration area.

16. The incoming call control method according to claim 15, comprising a step of, in the location management station, instructing, when any one of base stations in the location registration area receives an incoming call response signal from the mobile station, the base stations in the location registration area to delete the identification information from the broadcast information.

17. A base station of a mobile communication system, wherein the base station adds, when there is an incoming call to a mobile station, identification information indicating the mobile station to broadcast information and transmits the identification information.

18. The base station according to claim 17, wherein the base station deletes the identification information from the broadcast information when the base station cannot receive an incoming call response signal from the mobile station within a predetermined time measured from the incoming call toward the mobile station.

19. The base station according to claim 18, wherein the receipt of the identification information is performed during zone shift processing of the mobile station.

20. The base station according to any one of claims 17 to 19, wherein the base station adds information on time that passed from the incoming call toward the mobile station to the broadcast information in addition to the identification information and transmits the time information.

21. The base station according to any one of claims 17 to 20, wherein the base station transmits a paging signal to call the mobile station when there is the incoming call toward the mobile station.

22. The base station according to any one of claims 17 to 21, wherein the mobile communication system includes a location management station that performs management of the mobile station present in a predetermined location registration area, and the base station exists in the location registration area.

23. The base station according to claim 22, wherein the base station deletes, in response to notification from the location management station to base stations in the location registration area performed when any one of the base stations in the location registration area receives an incoming call response signal from the mobile station, the identification information from the broadcast information.

24. An incoming call control method for a base station of a mobile communication system, comprising a step of adding, when there is an incoming call to a mobile station, identification information indicating the mobile station to broadcast information and transmitting the identification information.

25. The incoming call control method according to claim 24, comprising a step of deleting the identification information from the broadcast information when the base station cannot receive an incoming call response signal from the mobile station within a predetermined time measured from the incoming call toward the mobile station.

26. The incoming call control method according to claim 25, wherein the receipt of the identification information is performed during zone shift processing of the mobile station.

27. The incoming call control method according to any one of claims 24 to 26, wherein, in the step of adding the identification information to the broadcast information and transmitting the identification information, information on time that passed from the incoming call toward the mobile station is added to the broadcast information in addition to the identification information and transmitted.

28. The incoming call control method according to any one of claims 24 to 27, comprising a step of transmitting a paging signal to call the mobile station when there is the incoming call to the mobile station.

29. The incoming call control method according to any one of claims 24 to 28, wherein the mobile communication system includes a location management station that performs management of the mobile station present in a predetermined location registration area and the base station exists in the location registration area.

30. The incoming call control method according to claim 29, comprising a step of deleting, in response to notification from the location management station to base stations in the location registration area performed when any one of the base stations in the location registration area receives an incoming call response signal from the mobile station, the identification information from the broadcast information.

31. A computer program product for an incoming call control method for a base station of a mobile communication system, the program causing a computer to perform processing for adding, when there is an incoming call to a mobile station, identification information indicating the mobile station to broadcast information and transmitting the identification information.

32. A mobile station of a mobile communication system, wherein the mobile station transmits an incoming call response signal to a base station and performs an incoming call operation upon receipt of identification information indicating the mobile station included in broadcast information transmitted by the base station when there is an incoming call toward the mobile station.

33. The mobile station according to claim 32, wherein the receipt of the identification information is performed during zone shift processing.

34. An incoming call control method for a mobile station of a mobile communication system, comprising a step of receiving identification information indicating the mobile station included in broadcast information transmitted by a base station when there is an incoming call toward the mobile station and a step of transmitting an incoming call response signal to the base station and performing an incoming call operation in response to this reception.

35. The incoming call control method according to claim 34, wherein the reception of the identification information is performed during zone shift processing.

36. A computer program product for an incoming call control method for a mobile station of a mobile communication system, the program causing a computer to perform processing for receiving identification information indicating the mobile station included in broadcast information transmitted by a base station when there is an incoming call toward the mobile station and processing for transmitting an incoming call response signal to the base station and performing an incoming call operation in response to this reception.

37. A location management station of a mobile communication system comprising a mobile station, a base station in a predetermined location registration area, and a location management station that performs management of the mobile station present in the location registration area, wherein
when the base station receives an incoming call response signal transmitted from the mobile station to the base station upon receipt of identification information indicating the mobile station added to broadcast information and transmitted by the base station when there is an incoming call to the mobile station, the location management station instructs all base stations in the location registration area to delete the identification information from the broadcast information.

38. An incoming call control method for a location management station of a mobile communication system including a mobile station, a base station in a predetermined location registration area, and a location management station that performs management of the mobile station present in the location registration area,
the method comprising a step of instructing, when the base station receives an incoming call response signal transmitted from the mobile station to the base station in response to reception of identification information indicating the mobile station added to broadcast information and transmitted by the base station when there is an incoming call toward the mobile station, all base stations in the location registration area to delete the identification information from the broadcast information.

39. A computer program product for an incoming call control method for a location management station of a mobile communication system including a mobile station, a base station in a predetermined location registration area, and a location management station that performs management of the mobile station present in the location registration area,
the program causing a computer to perform processing for instructing, when the base station receives an incoming call response signal transmitted from the mobile station to the base station in response to reception of identification information indicating the mobile station added to broadcast information and transmitted by the base station when there is an incoming call toward the mobile station, all base stations in the location registration area to delete the identification information from the broadcast information.
